# EUROPEAN PATENT APPLICATION

(11) **EP 4 502 970 A2**
(43) Date of publication of application: **05.02.2025**
(21) Application number: 24213809.7
(22) Date of filing: 26.11.2021
(51) Int. Cl.: G06V 40/20

(54) **A METHOD AND SYSTEM FOR THE IDENTIFICATION OF ANIMALS**

(62) Divisional of application: 21210686.8
(71) Applicant: Cattle Eye Ltd, Belfast, Antrim BT9 5JL (GB)
(72) Inventor: CANNING, Terry, Belfast (GB); ASKEW, Adam, Lurgen (GB); LENNOX, Mark, Magherafelt (GB); THOMPSON, Ian, Belfast (GB)
(74) Representative: Murgitroyd & Company

(57) **Abstract**

A method and a system for determining an identity of an animal. The method comprising obtaining (220), via an animal recording module, data associated with an animal moving through a space, the data comprising a video from a two-dimensional imaging sensor; extracting (230), from the data, a set of parameters by performing the steps comprising: determining a visual feature of the animal from the data; determining instances representing the shape of the animal in the data to form detected instances; identifying a set of reference points in each of the detected instances; determining one or more characteristics of the animal by processing at least some of the sets of identified reference points in a first module, the first module comprising a trained neural network; and generating the set of parameters comprising the visual feature and the determined one or more characteristics; generating (240) an identification vector from the generated set of parameters; selecting (250) known identification vectors from a first database of known identification vectors, each known identification vector corresponding to a unique registered animal; determining (260) a list of matching scores by comparing the generated identification vector with the selected known identification vectors; responsive to determining at least one selected known identification vector has a matching score exceeding a threshold; selecting (270) one of the at least one known identification vector based on at least one criterion; associating (275) the animal using the selected known identification vector; and identifying (280) the animal as the unique registered animal of the selected known identification vector; and responsive to determining that no selected known identification vector has a matching score that exceeds the threshold, identifying (290) the animal as unknown.

## Description

### Field

The present invention relates to a method and system for autonomous livestock monitoring. More specifically, the present invention provides a method and system for determining the identity of individual animals in a population of animals.

### Background of the Invention

Video analytics technology has seen rapid advances in recent years. Complex machine learning methodologies and algorithms are now becoming readily available. In addition, video capture technology has become ubiquitous with both stationary cameras and camera-equipped drones increasing in sophistication and decreasing in cost.

The availability of this technology has created an opportunity in the farming industry to harness the benefits of video analytics to improve animal monitoring and enable higher animal welfare standards. Higher animal welfare standards increase farm efficiency, avoid animal suffering, and address a consumer demand for confidence that the animals supplying their protein have experienced high welfare standards.

An important part of animal monitoring is identification of individual animals. Some existing animal monitoring systems identify animals using sensor technology that relies on manual intervention e.g. adding RFID tags. Such technology is by its nature non-scalable, and prone to inconsistency and inaccuracy. For example, sensors such as radio frequency identification, RFID, tags may become detached from an animal and/or become broken resulting in an animal not being identifiable by RFID systems. Even when RFID sensors are operating as intended, the success rate of RFID based identification is not 100 percent.

Other animal monitoring solutions rely on images obtained from specialised 3D cameras. Such specialised cameras are difficult to configure, maintain, and update - often complex configuration and calibration procedures are required to ensure the specialised cameras are functioning correctly.

Consequently, known animal monitoring solutions often have problems such as being difficult to expand or update; inaccurate or unreliable; restricted in operative range; and challenging to operate outdoors, in inclement or adverse conditions.

Therefore, there is a need to provide a cost effective and efficient solution for monitoring animals that overcomes the drawbacks of existing solutions.

### Summary

The invention provides a method and a system that dynamically, autonomously, identifies animals using multiple measurement modalities and continuously learns from the obtained operating data.

The system uses multiple measurement/imaging technologies to form multiple measurements. The multiple measurements are formed into an identification vector for each processed animal. As an example, an identification vector may comprise a visual measure and characteristic measure. The characteristic measure may be a health score or a behaviour score or a combination thereof. Some identification vectors also include RFID measurements. The identification vector of each animal can then be compared to previously acquired identification vectors. If the similarity is sufficient the identity of the animals can be determined. As the system uses multiple metrics, the system is more robust and stable than other systems that rely on a single identification technique/metric.

The system can also be used to bolster existing systems. For example, existing RFID systems do not work perfectly, and the new system can be used to supplement existing RFID when they fail. The system can therefore identify an animal when the existing RFID system fails and provide the identification to downstream systems, such as a parlour management system, increasing the overall accuracy across the downstream systems. The system can also alert the user to animals that fail to be identified by the RFID system. As a result, the user can quickly address whatever problem may exist e.g. replacing or fixing the RFID tag.

Further, as the identity of each animal can be determined via the autonomous comparison of identification vectors, the system is dynamic and self-expanding. For example, even if no set-up data is supplied when animals in a population are monitored, in time the same animal will be scanned again. The system will then recognise the animal from the match of the identification vector with the identification vector formed earlier for the same animal. In due course, all animals can be automatically enrolled and identified. The system can then monitor the population, to see if the number of animals change. The system can also monitor for a drop in the matching score of the identification vector. For example, if an animal characteristic changes e.g. an animal starts walking with a limp or is getting thinner this will reduce the matching score. The system may be configured to alert a user to this change, this will provide an early indication of a possible underlying health concern with the animal.

Another aim of the present invention is to determine the flow of animals through a passage by tracking the movement and/or direction of the movement of the identified animals detected by an animal recording module.

A further aim of the present invention is to provide a method and a system for identifying an individual animal in a population of animals e.g. cows, pigs, and the like that can be integrated and used in a farm environment, which is a challenging environment for a lot of known identification technology.

An aspect of the present invention relates to a method of determining an identity of an animal. The method comprising the steps of: obtaining, via an animal recording module, data associated with an animal moving through a space, the data comprising a video from a two-dimensional imaging sensor; extracting, from the data, a set of parameters by performing the steps comprising: determining a visual feature of the animal from the data; determining instances representing the shape of the animal in the data to form detected instances; identifying a set of reference points in each of the detected instances; determining one or more characteristics of the animal by processing at least some of the sets of identified reference points in a first module, the first module comprising a trained neural network; and generating the set of parameters comprising the visual feature and the determined one or more characteristics; generating an identification vector from the generated set of parameters; selecting known identification vectors from a first database of known identification vectors, each known identification vector corresponding to a unique registered animal; determining a list of matching scores by comparing the generated identification vector with the selected known identification vectors; responsive to determining at least one selected known identification vector has a matching score exceeding a threshold; selecting one of the at least one known identification vector based on at least one criterion; associating the animal using the selected known identification vector; and identifying the animal as the unique registered animal of the selected known identification vector; and responsive to determining that no selected known identification vector has a matching score that exceeds the threshold, identifying the animal as unknown.

According to some embodiments, extracting, from the data, the set of parameters by performing the steps further comprises segmenting the video into a set of frames; determining the visual feature of the animal from the data comprises determining the visual feature of the animal from at least one of the frames; and determining instances representing the shape of the animal in the data to form detected instances comprises determining an instance representing the shape of the animal in each frame to form detected instances.

In this way, rather than processing all the video, the amount of information being processed is reduced to a set of frames and visual features and instances based on the frame information.

According to some embodiments, determining an instance representing the shape of the animal in each frame to form detected instances comprises: generating a bounding box in each frame in which an instance of the animal body is identified; tracking, based on the bounding boxes generated, the movement of the animal across the frames to determine whether the movement of the animal through the space is continuous or interrupted; forming detected instances from the bounding boxes that correspond with a continuous motion of the animal.

In general, the natural movement of animals through the space may be interfered by obstacles such as other animals, which may lead to skewed mobility results. The determination with regards to the continuous movement of the animal may be obtained by analysing the bounding boxes. The use of a flow detection system may be advantageous in that the identification analysis is selectively performed on video showing the animal moving freely through the passage.

According to some embodiments, the step of identifying a set of reference points comprises: extracting the x and y coordinate values of each reference point; generating at least a first array and a second array for each individual frame, the first array comprising the x coordinate values of the reference points in each individual frame, and the second array comprising the y coordinate values of the reference points in each individual frame; and combining the values in the first and second arrays to create a multi-dimensional array of x and y coordinate values having a size defined by the number of individual frames and the number of reference points.

By monitoring for a duration of time from the obtained video, the x and y coordinate values may be obtained for each of the reference points to provide a data set for further analysis of the animal movement.

According to some embodiments, the step of identifying a set of reference points in each of the detected instances comprises applying a pre-calculated segmentation mask on the detected instance of the animal body.

In this way, the segmentation mask may be used to track the movement of the animals in the video. The segmentation mask may cover a pixel area associated with the body of the animal. The segmentation mask addresses issues in situations where a body portion from one or more animals overlap, or interfere, with the body of the detected instance of the animal being monitored/tracked.

According to some embodiments, the step of marking the identity of the animal as unknown comprises adding the generated identification vector to a second database containing unknown identification vectors.

In this way, information associated with an unknown animal can be stored. Accordingly, the system continuously learns about the animals and does not forget any information associated to an animal. The information is not discarded but is stored for future use.

According to some embodiments, the animal recording module further comprises an electronic receiver for receiving wireless signals; and the data further comprises a wireless signal identifying the animal.

Wireless receiver systems, such as RFID readers and tags, enable a wireless signal identifying the animal to be integrated into the system so as to supplement the identification of an animal by the additional wireless sensor means. Advantageously, the addition of a wireless signal identifying the animal provides additional means for improving the identification accuracy.

According to some embodiments, the two-dimensional imaging sensor is a colour camera. The colour camera enables visual features of the animal, for example variations in colour of the coat of the animal, to be used as a means of distinguishing one animal from another thereby improving the information obtained for the visual features of the animal.

According to some embodiments, determining one or more characteristics comprises: determining a health score for the animal by processing at least some of the sets of identified reference points in a second module comprising a trained neural network.

The reference points can be processed so as to determine the health score of the animal. A health score is any metric of the health of the animals e.g. estimated fat cover. Additionally, the health score can also be used to aid in identifying the animal i.e. an animal having a health score indicating health issues is not considered as a known animal if the known identification vectors indicate, for a particular animal, as having no health issues.

According to some embodiments, determining one or more characteristics comprises: determining a behaviour score for the animal by processing, in a second module comprising a trained neural network, at least some of the sets of identified reference points and identifying variations in at least some coordinate values of the sets of identified reference points.

The reference points can be processed so as to determine the behaviour score of the animal. A behaviour score is any metric that characterises how an animal acts e.g. how an animal moves i.e. walking gait. Additionally, the behaviour score can also be used to aid in identifying the animal i.e. an animal having a behaviour score indicating behaviour issues is not considered as a known animal if the known identification vectors indicate, for a particular animal, as having no behaviour issues.

According to some embodiments, the method further comprises detecting a series of signals, each signal including a time and being associated with a unique animal; and selecting known identification vectors from a first database of known identification vectors further comprises: determining a time that the animal recording module obtained the data and a time range that is within a range of the determined time; filtering the series of signals to select only the signals from the series of signals within the time range; and selecting the known identification vectors of the unique animals of the selected signals.

By filtering the series of signals to select only the signals from the series of signals within the time range, the number of signals to be processed is reduced which improves the processing of the system.

In some embodiments, detecting a series of signals comprises detecting a selection of RFID reads over time. Each RFID will have a corresponding identification vector. The best RFID can then be selected by selecting the highest comparison scores of the identification vectors.

According to some embodiments, the number of common values between the generated identification vector and the compared known identification vector is assessed by determining a cosine similarity between the generated identification vector and the known identification vector. A cosine similarity metric is provided as a computationally efficient technique to assess the similarity of identification vectors.

According to another aspect, a system for identifying an animal is provided. The system comprising: an animal recording module for obtaining data associated with an animal moving through a space; an identification system configured for determining an identity of an animal; a user device communicatively coupled to the identification system and configured to receive information associated with the determination of the identity of the animal; wherein the identification system comprises at least one processor configured to perform the method according to the first aspect of the invention.

In this way, there is provided a means for identifying an animal in a continuous and autonomous manner that requires little or no human intervention. The system may be used in a farm.

### Brief Description of the Drawings

The present application will now be described with reference to the accompanying drawings in which:
Figure 1 shows a system for determining an identity of an animal;
Figure 2a shows a process for operating the system of figure 1 ;
Figure 2b shows the process of figure 2a with optional animal flow detection;
Figure 3 shows a process for operating the system of figure 1;
Figure 4 shows an installation of part of the system of figure 1;
Figure 5a shows a segmented image and bounding box of an animal from a frame of a video recording;
Figure 5b shows the segmented image of figure 5a with reference points associated with body parts of the animal;
Figure 5c shows a series of segmented images with reference points;
Figure 6a shows a segmented image and bounding box of an animal with additional reference points associated with body parts of the animal;
Figure 6b shows a series of segmented images with reference points;
Figure 7 shows a segmented image with a segmentation mask and references points for defining areas of focus;
Figure 8a shows a process for adding a generated identification vector associated with an unknown animal to a database;
Figure 8b shows a process for promoting unknown identification vector(s) to a database;
Figure 9 shows a process for adding identification vector to a database from data obtained during an enrolment phase;
Figure 10 shows a process for training a machine-learning network to generate an identification vector generating and identification network;
Figure 11 shows a process for using a trained identification vector generating and identifying network to identify an animal;
Figure 12 shows generated identification vectors and RFIDs for animals, and selected known identification vector information and associated matching scores; and
Figure 13 shows parts of a particular identification vector, and the databases of known or unknown identification vectors.

### Detailed Description

The present invention will be illustrated using the exemplified embodiments shown in the figures. While this invention has been shown and described with reference to certain illustrated embodiments thereof, it will be understood by those skilled in the art that various changes in form and details may be made therein without departing from the scope of the invention encompassed by the appended embodiments.

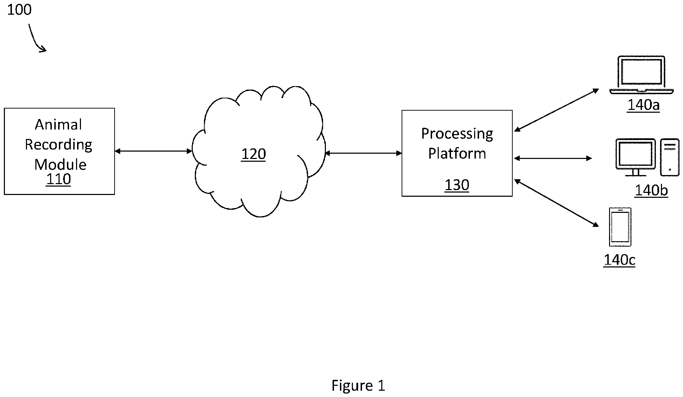

Figure 1 shows an example of a system 100 for determining the identification of an animal. The system 100 includes an animal recording module 110. The animal recording module 110 comprises at least one two-dimensional imaging sensor. The animal recording module 110 provides video from a two-dimensional imaging sensor, such as a camera. In some embodiments, the two-dimensional imaging sensor is a colour e.g., RGB camera. The video can be defined as a series of two-dimensional images or frames.

The two-dimensional imaging sensor is for obtaining images of an animal. The frame rate can be adjusted as necessary and can vary between embodiments as necessary.

In some embodiments, processing may occur on video data streams that have not been divided into frames as such. However, the processing of video data however divided, at least in outcome, is essentially equivalent to the processing that occurs in frames of data. Therefore, for brevity, only the processing of frames of data is discussed.

The animal recording module 110 may also comprise a sensor for identifying animals. Any sensing technology that shares information about the animal may be used. For example, a camera may identify the numbers on a tag that is attached to each animal. In some embodiments, the sensor comprises at least one electronic receiver for receiving wireless signals. The at least one electronic receiver for receiving wireless signals may be a radio frequency identification, RFID, reader for receiving the wireless signals such as RFID information from an RFID tag attached to an animal.

The two-dimensional imaging sensor may be configured to track one or more animals, or it may be configured to take images of any animal that moves within its field of view. In some embodiments, the two-dimensional imaging sensor may be positioned above a passageway so that one or more animals can be imaged as they pass below the two-dimensional imaging sensor.

In some embodiments, at least one other two-dimensional imaging sensor may also be located at another location, different to the location of a first two-dimensional imaging sensor. The use of multiple two-dimensional imaging sensor helps ensure any passing animals is recorded. In some cases, an animal is recorded as it passes through a first area of a space and the second two-dimensional imaging sensor may record an animal as it passes through a second area of the space, the second area being different to the first area. The first area may be an area in a vicinity of an entrance to a space and the second area may be an area within a vicinity of an exit to the space. In an exemplary arrangements, at least one two-dimensional imaging sensor may be located within a farm building, such as but not limited to, a barn and configured so as to record at least one animal as it moves about the area within the barn. The two-dimensional imaging sensor may be configured to track one or more animals, or it may be configured to take images of any animal that moves within its field of view. In some embodiments, the two-dimensional imaging sensor may be positioned above a passageway of the barn so that one or more animals can be imaged as they pass below the two-dimensional imaging sensor. The arrangement may be operable in conjunction with the sensor arrangement above a passageway as described above so as to enable monitoring of animals at separate locations within a farm environment. An advantage of such an arrangement is that the animals can be easily constrained within the field of view and the direction of motion and the ground traversed whilst imaging can be known. This helps limit the variation in the movement of animals due to environmental factors.

The animal recording module 110 is communicatively coupled to a communication link 120. The animal recording module may be communicatively coupled to the communication link 120 by a wired or wireless connection.

A video of animals obtained from the two-dimensional imaging sensor may be stored in a database, in a local or remote computer server. The database may be in any suitable form, such as a relational database like an SQL database, or in a fixed content storage system used to store video recording.

The animal recording module 110 may further be configured to transmit live video footage of the animals being observed via a wired or wireless communication network to a processing platform 130 for further processing and analysis. For example, the video footage may be retrieved directly from the animal recording module 110 by the processing platform 130 for processing and analysis over the communication link 120. Alternatively, video footage may be retrieved from the database for processing and analysis.

The software application platform may be running on a server e.g., a remote or local computer application server, and may be configured to determine an identity of the animal, based on the processing and/or analysis of the video footage. The software application platform may be configured to determine other insights of an animal, such as health and behaviour of the animal. An example health insight is the lameness status of an animal because the lameness provides a good surrogate of an animal's health, as would a body condition score of the animal. An example behaviour insight is the mobility level of an animal because assessing the mobility provides a good surrogate of an animal's behaviour.

When coupled to the robust identification of an animal, the inferred health and/or behaviour insight can provide important information for the user. For example, it means that one sick animal even in a large population can be quickly identified. The system can thus accurately assess the number of animals that may be sick even if the sick animals are in the midst of a large population. The results of the analysis can be transmitted, by wired or wireless communication means, to a user electronic device 140a - 140c running a software application allowing an end user to view and manage the data obtained from the livestock monitoring software platform 130. For example, an end user may share an internet protocol, IP, address of an existing camera imaging device used in a farm environment for security and/or animal observation purposes so that live video footage can be analysed and processed by the livestock monitoring software platform. The system may provide the ability to autonomously identify the animal(s) and extract insights of the state of the animal including mobility scores, body condition scores and other insights.

For example, the present invention may be used for identifying an animal amongst a plurality of animals within a herd, which is a part of livestock monitoring. By determining the identification of an animal, the behaviour and/or health of that identified animal may also be monitored and associated with the identified animal accordingly. For example, a farmer may be interested in the overall health of his/her herd. The present invention may also or alternatively determine the identity of an animal from the herd and welfare indicators of the determined animal may be associated with each identified animal. In this way, a farmer may receive notifications regarding the state of the monitored animal(s), each animal being identified amongst the herd, along with associated behavioural/health insights. The computer software application running on the device 140a - 140c may also initiate certain actions to address potential issues with the health.

The present invention determines the identity of the animal based on visual features and one or more characteristics of the animal. The visual features may be, for example, pattern markings on the body of the animal. For example, individual Friesian cows have distinctive patterns on their body. A number or pattern markings may also be added to the body of the animal to provide an artificial visual indication of the identity of the animal. The number or pattern markings may have been added to the body of the animal in a manual or automated manner known in the art.

The present invention also determines one or more characteristics of the animal from a change in animal seen in the video footage. For example, the gait of the animal may be determined to assist in identification of the animals. The one or more characteristics can also include a mobility determination and/or a health determination.

These determinations may be delivered to, for example, an end user 140a - 140c in a notification and optionally in an actionable format e.g., a list of identified animals that can be printed or emailed to a vet, or a text to the farmer for urgent alerts. For example, a farmer may receive notifications regarding the state of monitored animals on the computer software application running on his/her electronic device, and accordingly could initiate certain actions such as, for example, contacting a vet to attend to identified animal(s) having, for example, mobility issues or weight issues such as being underweight.

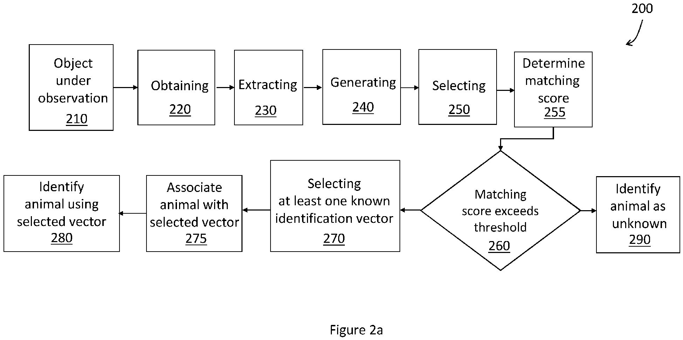

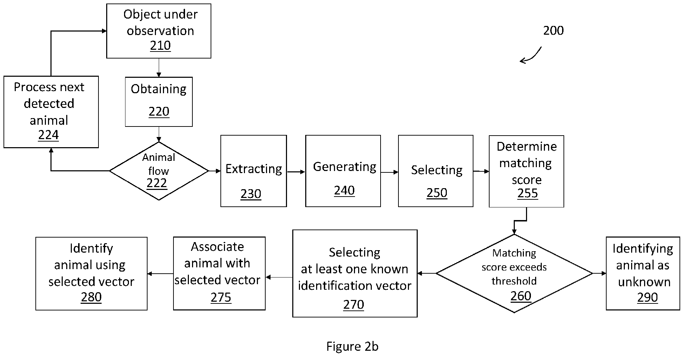

Figures 2a and 2b show a method 200 for determining an identity of an animal. By way of illustration, a number of animals may be observed at step 210. Data associated with the animals, obtained by means of an animal recording module, may be obtained at step 220, for example, as the animals pass through a walkway. The data comprises a video from a two-dimensional imaging sensor. The obtained video data may therefore be a set of data associated with the animal moving through the space, or walkway. The set of data is then processed to extract 230 features of the animal being observed. The features include visual features and one or more characteristics of the animal being observed. The one or more characteristics may comprise a motion pattern of the animal and/or a health score. The system then extracts 230 a set of parameters from the set of obtained data associated with the animal.

During the extraction step 230, the video is separated into a set of frames. A visual feature of each animal is then determined from at least one of the frames. In some cases, the visual features will be extracted from multiple, or all, frames. Example visual feature include, but are not limited to, the pattern markings of an animal.

In addition to determination of the visual feature, during extraction 230 the system determines an instance representing a shape of the animal in each frame to form detected instances of the animal. A set of reference points in each of the detected instance is then identified. The reference points in each set of reference points represent particular positions of the animal in each frame.

One or more characteristics of the animal can then be determined by processing at least some of the sets of identified reference points in a first module, the first module comprising a trained neural network. The trained neural network identifies the characteristic of the animal that would result in the determined sets of identified reference points.

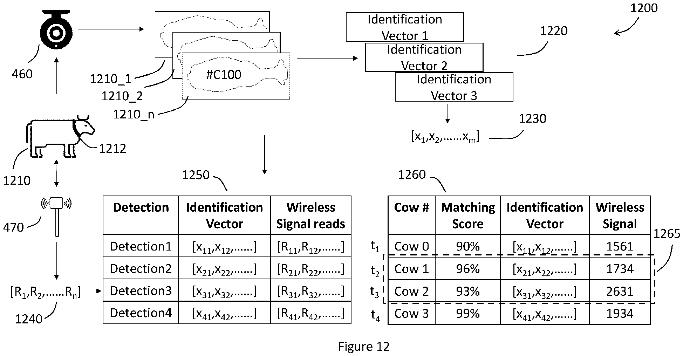

Once the visual features and the one or more characteristics for the animal have been determined, they are combined to generate a set of parameters. The set of parameters therefore comprises the visual feature and the determined one or more characteristics of the animal. For each animal, an identification vector is then generated 240 from the set of parameters. Further details of the generated identification vector are discussed below with reference to Figure 12.

At step 250, known identification vectors from a first database of known identification vectors are selected. Each known identification vector corresponding to a unique registered animal. The selection of the known identification vectors may comprise selection of the entire first database. In other embodiments, the selection will be a subset of the first database.

In some cases, the selection may be a single known identification vector. In this case the identification process serves more as a confirmation of the selected identity associated with the selected known identification vector.

The selection can also be based on other signals. For example, acquired RFID information can be used to limit the number of candidate animals. In this case, the selection may only comprise the known identification vectors that have the acquired RFID values. Any signal or method to make the selection of the known identification vectors will result in a saving in processing because there will be less candidate known identification vectors to process. A range may be added to ensure the selection of the known identification vectors cover the likely candidates. For example, the selection of the known identification vectors may include all known identification vectors having RFIDs values that were sensed within 5 seconds of the time at which the video data was acquired.

A list of matching scores is then determined 255. The determination is made by comparing the generated identification vector to the selected known identification vectors. Any vector comparison method that provides a matching score may be used. For example, comparison based on one or more parameters of the generated identification vector and the known identification vector being within a threshold or range may be used for comparison. Increasing the number of parameters to be compared between the vectors increases likelihood of a match. In other examples, cosine similarity between the generated identification vector and the known identification vector may be used for comparison. In some embodiments, each matching score is determined by assessing the number of common values between the generated identification vector and the compared known identification vector. A common value is not necessary the same value but rather a value that is within a range of the compared value. The actual range depends on the nature of the values that are compared. Some values may have ranges associated that are larger owing to greater variation in the underlying measurement. Essentially, this is a test of vector similarity and several techniques are known and may be used to perform this test.

A test 260 is then performed to see if at least one of selected known identification vectors has a matching score exceeding a threshold.

If at least one of the selected known identification vectors exceeds the threshold, a selection is made from selected known identification vectors exceeding the threshold. In some cases, only one selected known identification vectors will exceed the threshold in which case the single selected known identification vector exceeding the threshold can be used to identify the animal. If, however, multiple selected known identification vectors exceed the threshold, then a further selection 270 is required. This further selection can be based on any criteria, such as which of the selected known identification vectors exceeding the threshold has the highest matching score. The result is the determination of a single selected known identification vector.

The association of the animal with the single selected known identification vector is then performed 275. Each known identification vector is associated with a unique registered animal. Therefore, the animal in the video may then be identified 280, as the unique registered animal of the selected known identification vector.

If the test 260 of matching scores reveals that no selected known identification vector has a matching score that exceeds the threshold, the identity of the animal is determined 290 to be unknown.

Optionally, prior to extracting the set of parameters from the set of obtained data associated with the animal at step 230, the continuous movement of the animal through the designated space may be verified, as shown in figure 2b. For example, a flow detection process may be provided to detect whether the movement of the animal through the space was continuous or impeded during the video recording. In general, the natural movement of animals through the space may be interfered by obstacles such as other animals, which may lead to skewed results. To improve the accuracy of the determination of the identification of the animal, analysis may be only conducted on intervals showing the animal moving freely through the passage. In other arrangements, monitoring of the free flowing movement of an animal may not be required such as for example when there is a single animal being monitored within the field of view of a two-dimensional imaging sensor. Preferably, video intervals showing an animal near another animal, which may impede its movement, or showing that the animal has stopped entirely, due to an animal in front or some other obstacle, may be disregarded from the identification analysis. The determination with regards to the continuous movement of the animal may be obtained by analysing bounding boxes produced by a segmentation algorithm. If no sufficient intervals of free movement can be extracted, the animal is not analysed. The use of a flow detection system may be advantageous in that the identification of the animal is selectively performed on videos showing the animal moving freely through the passage. In the case, where the flow detection system determined 222 that the movement of the animal was interrupted, then the interval showing the detected animal is disregarded from the analysis, and the process moves to the next animal at step 224.

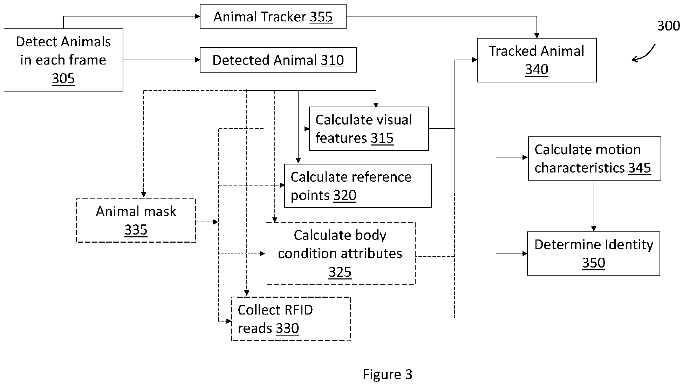

Figure 3 shows a method 300 for determining an identity of an animal and calculating at least one motion characteristic of the animal. By way of illustration, a number of animals may be detected 305 from data obtained from at least one two-dimensional imaging sensor such as described above. The animals may be detected in each frame. The animal may be detected using, for example, an object detection algorithm. For each detected animal 310, the data associated with the detected animal is processed to calculate 315 the visual features and reference points 320. Optionally, the data is processed to calculate 325 body condition attributes of the detected animal such as the amount of fat coverage of the detected animal at locations of the body of the animal. The reference point may be used to assist in this assessment by helping to select the appropriate part of the body of the animals to asses.

Optionally, the system may be configured for receiving 330 a radio frequency identification, RFID, reading of the detected animal. Optionally, a mask may be used, such as a segmentation mask, so as to distinguish an animal within a plurality of animals that may be in close proximity to one another. For the animal associated with a segmentation mask, the steps 315, 320 and 325 may be carried out. In this way, the system is able to clearly distinguish each respective animal amongst a plurality of animals thereby ensuring that any calculations of the animal attributes are assigned to the correct animal. In situations where there is only one animal that is being monitored, such segmentation mask is not required in such instance. The system may then use one or more of the calculated visual features 315, the calculated reference points 320 of the animal, calculated body condition score/attributes 325 of the animal or RFID readings and assign these to a tracked animal 340 being monitored by the imaging sensor. The system may be configured to concurrently track 355 the animal by means of, for example, an animal tracking algorithm and assign the information from the detected animal 310 to the animal being tracked. Once the system has assigned the information to the tracked animal, the system may be further configured, for each tracked animal 340, to calculate 345 motion characteristics and determine the identity 350. In this way, the system not only determines the identity of the tracked animals but also supplements the information related to the identity of that animal with insights on their health and behaviour in the form of calculated 345 motion characteristics.

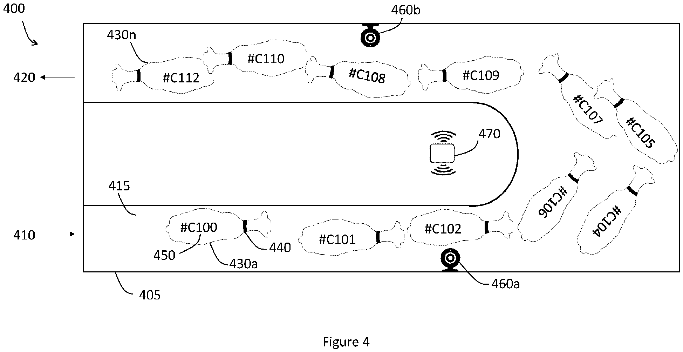

Figure 4 shows a possible arrangement 400 for capturing a recording of an animal 430a - 430n such as a cow, a pig, a horse, and the like. The animal(s) may pass through the walkway in an orderly fashion. For example, animals labelled #C100, #C101, #C102, #C109, #C108, #C110, #C112. In other instances, the animals may end up passing through the walkway in a disorderly manner and may pass each another. Therefore, the order of animals assessed by recordings and/or readings of the animal when passing through the lower half of the walkway may be different to that from recordings and/or readings that may be obtained when the animal passes through the upper half of the walkway in the illustrated example. The recording of the animal is by means of video from a two-dimensional imaging sensor 460a. Another two-dimensional imaging sensor 460b is utilized for capturing recordings of the animal at other locations throughout the walkway. The two-dimensional imaging sensors 460a, 460b may be collectively referred to as 460. Additional recordings of the animal are also obtained by means of at least one electronic receiver 470 of the animal recording module for receiving wireless signals. The electronic receiver may be for example an RFID reader and the wireless signals may be for example RFID information being transmitted from an RFID tag. In some applications, the two-dimensional imaging sensor 460 is mounted at an overhead location and a building 405, having an entrance 410 and exit 420, of a farm environment may be used for capturing the video recording. The imaging sensor may be a colour camera. The imaging sensor can be an existing camera used for other purposes, such as security and/or animal observation within the farm environment. Once video footage has been obtained, the image processing device may extract, from the animal recording module, a set of reference points associated with specific locations on the body of the animal. Other visual feature such as an identification number that has been attached to the body of the animal may be recorded and/or other visual features of the animal such as the body patterns of the animal. One or more characteristics of the animal may be determined by processing, by a trained neural network, at least some of the sets of reference points. In this way, a set of parameters comprising visual features and the determined one or more characteristics of the animal(s) can be generated.

In some embodiments, an electronic receiver 470 may be located adjacent, or near, the position of the two-dimensional imaging sensor 460 at a height for receiving a wireless signal identifying the animal. The wireless signal identifying the animal may be sent from a wireless sensor 440 attached to the body of the animal as the animal passes by the receiver 470.

For example, the wireless signal identifying the animal may be an RFID tag attached to at least one location on the body of the animal, the RFID tag configured to transmit the wireless signal containing information related to the animal to which the tag is attached. The wireless signal being received by the electronic receiver 470, which in this example may be an RFID reader that is configured to receive the wireless signal and obtain information identifying the animal from the RFID tag output. The RFID tag is thus communicatively coupled to the RFID reader to send RFID information of the associated animal to the RFID reader as the animal passes the RFID reader as it moves through the walkway 415. The RFID information of the associated animal may comprise a unique identification for the respective animal.

Once video footage has been obtained, the processing device extracts a set of parameters from obtained data associated with the animal moving through the space. The data comprising a video from a two-dimensional imaging sensor.

The extracting may comprise the steps explained above in reference to figure 2a. In each set of reference points identified in each of the detected instance, each reference point has an x and y coordinate. The x and y coordinate values of each reference point may be extracted to determine the position of each reference point and consequently the movement of each corresponding body part, across the set of individual frames. The processing platform, based on the x, y, or x and y coordinate values of the extracted set of reference points corresponding to each individual frame, may determine a characteristic score, which is indicative of the characteristic such as a motion pattern of the animal.

The reference points in the frames and/or their relative change in position between frames may allow the determination of the following insights. A change in reference points' position between frames may be used to analyse the mobility of the animal, thus providing a behaviour insight to aid in the identification of an animal. A change in reference points' position in a frame may be used to assess the lameness level of the animal, thus providing a health insight to aid in the identification of an animal.

A change in the reference points can assist in locating the areas of image data in a single frame to assess for excess fat cover, for body condition scoring, thus providing a health insight to aid in the identification of an animal. Thus, variations in the coordinate values of the reference points may be indicative of issues in the animal such as, for example, mobility issues in the animal that can be used in identifying a particular animal.

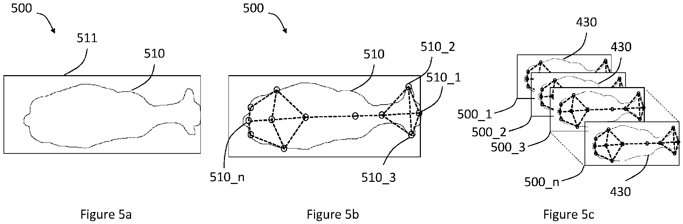

Figure 5a illustrates further details of the processing of the data associated with an animal as obtained from an animal recording module. A segmented image 500 obtained during the extraction step 230 from the animal recording module 110 is shown. An instance of the animal body 510 is detected in the segmented image 500. The animal instance 510 may be detected by an object detection algorithm which creates a bounding box 511 around the detected instance 510. Figure 5b then shows the set of reference points 510_1 to 510_n that have been identified by processing the detected instance 510 of the segmented image 400 of the animal. In the example illustrated in Figure 5b, twelve reference points, shown by the circular shapes, are identified along the body of the animal from the head to the tailhead. Figure 5c then shows a set of segmented images 500_1 to 500_n of the animal 510, one per frame, with the identified reference points. This is therefore a set of reference points.

EP application EP20183152.6 filed on the 30 June 2020 describes an exemplary process that may be used for determining the reference points on locations of the animal instance.

In summary, the exemplary process performs the following steps:
i) providing data input, for example a number of videos obtained from animals in different farms. For example, a data set of three hundred video recordings of animals moving through a predetermined space may be provided for training a standard ID classification network of the system to identify reference points on the body of an animal. For example, the ID classification network may be a neural network, such as a ResNet50, or ResNet101, or another type of a convolutional neural network, CNN, architecture. At a training stage, each reference point may be manually labelled. Furthermore, the classification network may be trained on historical video recordings from the same animal, to cope with animals that have a naturally abnormal locomotion, avoiding the case of false positives.
ii) detecting the reference points, which may be performed using the trained ID classification network of step i). A standard classification layer within the convolutional neural network may be replaced by deconvolution layers to scale feature maps of the animal into heatmaps representing areas of likelihood for each reference point via training on the data from step i)
iii) extracting x and y coordinate values for each reference point in each frame. The reference points x and y coordinates values may be taken as the areas of highest magnitude from the heatmaps produced in step ii). These reference points may then be associated with a specific instance of each animal using a pre-calculated segmentation mask.

Using at least twelve reference points ensures processing efficiency while minimising the number of data/information that needs to be processed by the processing device and thus improving the ability to identify motion pattern issues of the animals such as lameness or body condition issues such as the animal being underweight.

In an alternative arrangement, reference points may be extracted by an algorithm trained on identifying the shape of the animal in the field of view of the two-dimensional imaging sensor. The reference points may then be used in conjunction with at least one or more of the following, an algorithm for determining the mobility of the monitored animal(s), an algorithm for determining the body condition score, BCS, of the monitored animal(s) or as a secondary feature set for the determining the identification of the monitored animal. For example, an identification algorithm may, instead of using reference points, pass data from the two-dimensional imaging sensor for a particular animal to a ResNet50 neural network. The output from one or more of the reference point algorithm, the mobility algorithm and the body condition score algorithm may then be used to buttress the identification algorithm and provide an overall feature vector output from the identification algorithm for identifying a respective animal.

One or more characteristics for the animal may also be determined, by means of a convolutional neural network. To assist in processing, the set of reference points may be formed into multidimensional array. To form the arrays, the x and y coordinate values of each reference point are extracted, generating a first array and a second array for each individual frame. The first array comprises the x coordinate values of the reference points in each individual frame, and the second array comprises the y coordinate values of the reference points in each individual frame. The values in the first and second arrays are then combined to create a multi-dimensional array of x and y coordinate values having a size defined by the number of individual frames and the number of reference points.

The convolution neural network is be trained to determine one or more characteristics of an animal based on the movement obtained from corresponding reference points. In one example neural network, the steps for determining a mobility score of the animal comprise successive convolution and pooling iterations on the x and y coordinate values of the extracted set of reference points corresponding to each individual frame of the input data. The initial values for the kernel and filter are randomly selected and are gradually refined through the training of the network on the provided data. Following each convolution, a batch normalization and a rectified linear unit (ReLu) activation may be performed. Following the successive convolution and pooling iterations an average pooling on the output may be performed. A linear activation may be performed on the output of the average pooling operation. Following the linear activation, a score indicating the mobility score of the animal is generated. In this way, the initial filtering and max pooling performed by the successive convolution and pooling iterations is passed along the temporal axis, wherein the temporal axis may be indicative of movement across the input matrix from one reference point to another reference point, for example from the head to the ear to the tail and so on, with a final filtering process along the feature's axis, wherein the feature's axis is indicative of movement from frame one to two to three and so on, before being passed to a final fully connected layer with linear activation within the image processing platform. The final result of the analysis is the generation of a mobility score e.g. a floating-point number between 0.0 and 100.0, indicating the level of mobility. For example, a score of 0.0 may indicate an animal with a high degree of mobility, whilst a score of 100.0 may indicate a poor degree of mobility. These values may be translated using thresholds to other measures. For example, a 0.0 may be translated to a ROMS score of 0, which may indicate absence or a low degree of lameness whilst a 100.0 may be translated to a ROMS score of 3 signifying a high degree of lameness in the animal. In this way, insights based on the score determined by the CNN may be delivered to, for example, an end user of the system in a notification and optionally in an actionable format e.g. a list of animals may be printed or emailed to a vet, or a text to the farmer for urgent alerts.

In some cases, the above-mentioned method of assessing the mobility score, which does not use a neural network can be used to provide the training of the network. Alternatively, expert labelling of the mobility score can be used to provide training data. The mobility score information may then be used as a secondary data set to assist in the identification of an animal where the primary data set may be the data passed from the two-dimensional imaging sensor for a particular animal to a ResNet50 neural network to identify the animal. In this way, the one or more characteristics, such as mobility score, supplements the determined identity of the animal as determined via, for example, the ResNet50 neural network.

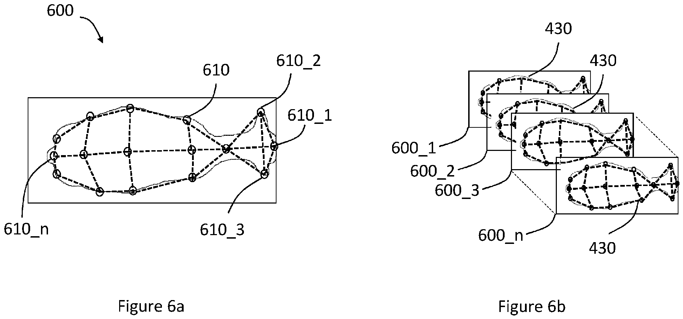

Figures 6a and 6b illustrate an instance of an animal body 610 which may be detected in the segmented image 600 in a manner similar to Figures 4b and 4c. In the example arrangement, there is shown 16 reference points shown by the circular shapes, which are identified along the body of the animal from the head to the tailhead. Figure 6b shows a set of segmented images 600_1 to 600_n of the animal 610, one per frame, with the identified 16 reference points. Increasing the number of reference points is advantageous in that it provides a means of being able to generate areas of focus which the health and/or behaviour algorithms can then provide insights.

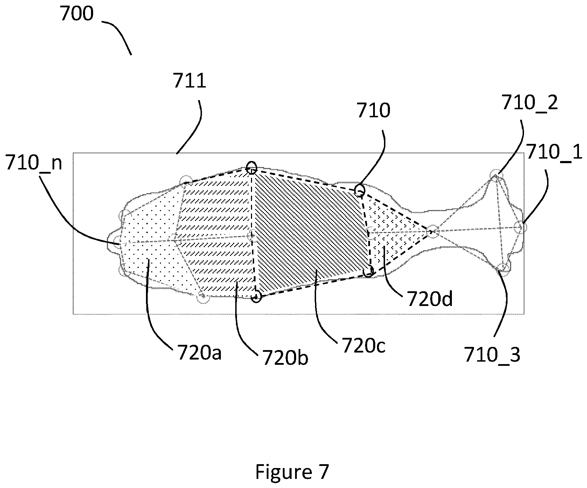

Figure 7 illustrates an instance of an animal body 710 which may be detected in the segmented image 700. The animal instance 710 may be detected by an object detection algorithm which creates a bounding box around the detected instance in a manner similar to that as described with reference to Figures 4a - 4c. Figure 7 shows the set of reference points 710_1 to 710_n that have been identified by processing the detected instance 710 of the segmented image 700 of the animal. In the example illustrated in Figure 7, 16 reference points, shown by the circular shapes, are identified along the body of the animal from the head to the tailhead. The object detection algorithm analyses the entire body of the animal and may be configured to utilize the reference points so as to generate areas of focus 720a - 720d that the algorithm can then provide health and/or behaviour insights of the animal at the one or more respective areas of focus. In an example arrangement, an algorithm such as a You Only Look Once, YOLO, algorithm may be used to produce the above mentioned bounding boxes for each animal. The bounding boxes may then be passed to a reference point algorithm so as to enable the algorithm to identify reference points from the respective animal detected within the bound box. These reference points are then used to determine insights of the animal such as, for example but not limited to, health and/or behaviour insights.

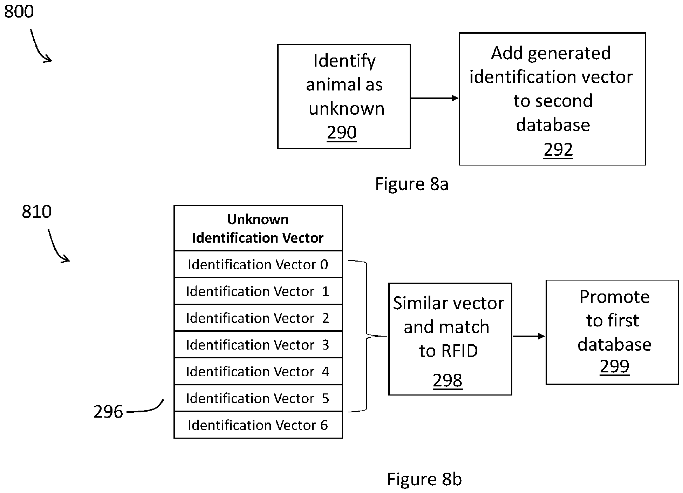

Figure 8a shows an example method 800 for managing an animal that has been identified as being unknown. The identification vectors associated with the unknown animal may be stored in a database for future cross referencing. Following the generation of the identification vector of the animal being observed, the animal is identified 290 as an unknown animal following the determining step 260 of Figure 2a. The generated identification vector for the unknown animal is added 292 to a second database containing unknown identification vectors i.e. unknown or unregistered animals. In this way, the second database may keep a record of unknown identification vectors. In other words, the generated identification vector of animals whose visual features and one or more characteristics are not sufficiently similar to known identification vectors are stored for future use. This will then permit the future registration of currently unknown animals.

Subsequent processing 810 of the unknown identification vector database is shown in Figure 8b, a plurality of identification vectors may be compared 298 to identify similar identification vectors within the database and to identify matching identification obtained from another data source such as an RFID tag associated with an animal. The system will then identify these previously unknown identification vectors as being associated with a particular animal. The unknown identification vectors that have been identified with an animal are then promoted 299 to the first database. In this way, the system is able to automatically increase the number of known identification vectors in the system. In other words, the system can automatically expand to include new animals. This means the system can be integrated into existing systems such as those that utilize RFID's and RFID tags attached to an animal for identifying the animals. Existing systems may not provide identification of each and every animal due to issues such as, for example, where an RFID tag has become detached from an animal and therefore when the animal passes an RFID reader, the animal is not identified due to the missing RFID tag. Accordingly, the system supplements such existing systems as it may be adapted to identify new animals and therefore the system can automatically expand to include new animals which may not be otherwise identified due to, for example, missing ear tags for RFID identification or may not be tagged due to being recently included within the population of animals within, for example, a farm environment.

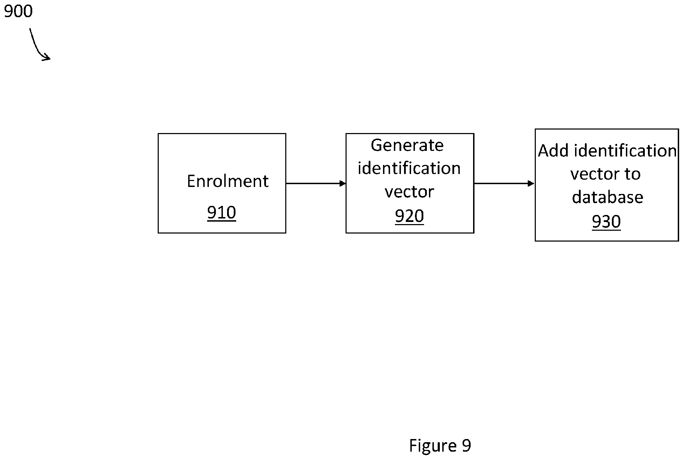

Figure 9 shows an example method 900 for the identification of the animal(s). The method comprises an enrolment 910 for enrolling the animal(s) into the system, generating an identification vector at step 920 for generating the identification vectors from the generated set of parameters for individual animals, and adding 930 of the identification vectors to a first database. In the arrangement shown, the enrolment step may be adapted to allow the animal to be enrolled onto the system through preparation of a labelled dataset of the animal(s) thereby ensuring that the identification vectors for each animal are allocated to the correct animal thereby avoiding misidentification. In this way, a database of known identification vectors may be provided such that the known identification vectors correspond to a unique animal for future comparison of an observed animal to identify whether the observed animal is known or not.

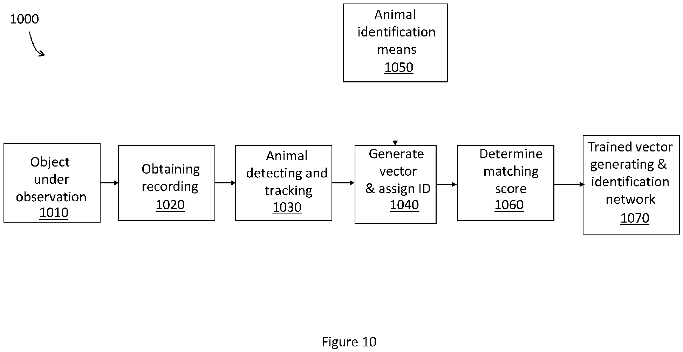

Figure 10 shows a process 1000 for enrolling an animal. For example, and with reference to Figure 4 discussed above, during the enrolment step, the animal(s) under observation 1010, 210 may move along the walkway 415. A recording of the animal(s) will then be obtained 1020 from the animal recording module 110. An additional source 470 also obtains the identity the animal(s). For example, the actual identity of the animal may be determined by an RFID reader configured to receive a radio frequency identification, RFID, tag 440, attached to the body of the animal. Alternatively, the identity could be obtained from a visual reading of a number marking 450 on the body of the animal. The information is recorded in the order in which the animal(s) passed the two-dimensional imaging sensor 460. Arrangements may be put in place to ensure that the order of the animal(s) does not change during the enrolment process i.e., a walkway may be dimensioned such that animal(s) pass through the walkway in single file and therefore ensure the animal(s) cannot overtake one another as they walk through the walkway thereby enabling to keep track of the animal(s).

The enrolment data may then be stored in a computer readable format, e.g. JavaScript Object Notation (JSON), extensible mark-up language (XML) and the like and may contain a list of animal identifications in the order they passed the animal recording module 110, 460, 470. Video footage associated with the enrolment may then be passed through a video processing algorithm of the processing device 130. The video processing algorithm may then be adapted to perform at least the following tasks:
i) each video frame is passed into a previously trained object detection network 1030 which creates a bounding box for each animal instance/image detected in each video frame and optionally a segmentation mask may be created for each animal instance/image detected in each video frame. A segmentation mask enables the object detection algorithm to focus on a respective animal within the created bounding box when there are, for example, overlapping portions of another or plurality of animals in the created bounding box of the respective animal.
ii) the bounding boxes generated for each animal are then passed into an object tracking algorithm 1030 which groups multiple bounding boxes across frames and generates an identification vector and assigns an identification obtained from an animal identification means, such as RFID tag, which corresponds to an individual animal in the footage
iii) for each animal detected in the video recording, at least ten bounding boxes may be selected from corresponding number of frames which are extracted as images.

The animal(s) detected as above may then be sorted by an order they appeared in the footage and synced up with the actual animal identifications, IDs, 1050, 440 as obtained earlier from the additional source 470. The synced-up identifications from the enrolled animals may be used as training data in conjunction with the images extracted in step iii) for determining a matching score at step 1060.

The trained vector generation and identification network 1070 processes new video footage as per steps (i) - (iii) above. For each animal detected in the video recording, each image generated at step (iii) may be passed through the trained vector generation and identification network 1070 to generate an array of identification vectors for each of the enrolled animals. These identification vectors may then be averaged over a number of images e.g. five, ten or more images extracted in step iii) above from the video frames to generate one identification vector for the detected animal. Once all the footage has been processed, the identification vectors for each animal are post-processed to assign the most likely identification to that animal based on the identification vectors for all other animals. By post-processing the identification vectors generated for each animal it is possible to prevent assigning the same ID to more than one animal. Furthermore, post-processing allows to check for animals which may not have been enrolled in the system or there may be an issue with the enrolment data. In this way, by assigning an identification by animal identification means, the system provisions a means for easily detecting each individual animal amongst a plurality of animals by enabling a unique identification to be assigned to each animal therefore avoiding potential issues, such as, mistaken identity and therefore preventing assignment of an identification to the wrong animal. As such, based on the enrolment data the system may detect the identity of each individual animal without the need of manual intervention e.g., reading the RFID tags, and the like.

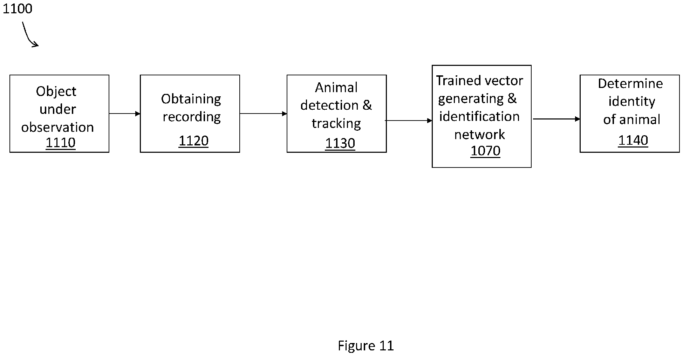

Figure 11 shows a process 1100 for identifying an animal based on a previously trained vector generating and identification network 1070. For example, an arrangement for capturing images on an animal 1110 may be provided as per the arrangement discussed with reference to Figure 4. The arrangement may be configured to capture recording 1120, 460, 110 of a plurality of animals or an individual animal. Said recording may then be analysed by a processing platform 130. The processing platform may then utilize object detection and object tracking algorithms 1130, such as those previously discussed, to detect and track the animal(s) within the recording. Data for the animal(s) detected and tracked by the image processing platform may then be processed by the trained vector generating and identification network 1070. In this way, new footage obtained by the animal recording device may be processed by the arrangement illustrated to assess at step 1140 an identity of the animal(s) in the new footage using a previously trained vector generating and identification network 1070. This provides a way to check for animal identifications which likely have not been enrolled in the system. Advantageously, the system continuously updates with animal identification information thereby training and learning as the system autonomously analyses the information obtained for respective animals.

Figure 12 shows an arrangement in which a trained vector generating and identification network may be used to identify the individual animal 1210. There are a number of bounding boxes of the same animal from different subsequent frames 1210_1 through to 1210_n, similar to those as illustrated in Figures 5c, 6b. Each individual bounding box is passed through the trained vector generation and identification network 1070 as previously described with reference to Figures 10 and 11 for extraction of features of the animal i.e., reference points, pattern etc. via for example, but not limited to, deep learning models such as ArcFace, and reference points are extracted, so as to generate a vector 1220 comprising identification information and an average of the identification vectors are taken to form a generated identification vector 1230. In addition to the feature extraction, RFID information from an RFID tag 1212 of the animal is obtained by an RFID reader 470. Other sensor technology for providing identity of an animal may also be used alternatively or additionally. The wireless signal information from the wireless transmitter 1212 is extracted to form a wireless sensor read vector 1240. Each animal detection, detection 1, detection 2 and so on each has an associated identification vector and wireless signal read vector. In other words, the system makes a number of detections of animals and obtains via the animal recording module a set of data associated with the animal moving through a space, or walkway. A set of parameters from the set of obtained data associated with the animal is extracted from the animal recording module using the processing device platform. The system may be configured to generate an identification vector from the set of parameters for each detection as illustrated 1250. The system may be configured to select known identification vectors from a first database of known identification vectors where each known identification vector corresponds to a unique animal. The system may determine a list of matching scores by comparing the generated identification vector to the selected known identification vectors as shown 1260. Any vector comparison method that provides a matching score may be used. For example, comparison based on one or more parameters of the generated identification vector and the known identification vector being within a threshold or range may be used for comparison. Increasing the number of parameters to be compared between the vectors increases likelihood of a match. In other examples, cosine similarity between the generated identification vector and the known identification vector may be used for comparison. In another example, each matching score is determined by assessing the number of common values between the generated identification vector and the compared known identification vector. A common value is not necessary the same value but rather a value that is within a range of the compared value. The actual range depends on the nature of the values that are compared. Some values may have ranges associated that are larger owing to greater variation in the underlying measurement.

In response to determining at least one of known identification vector has a matching score exceeding a threshold, the one of the at least one known identification vector is selected the animal is identified using the selected known identification vector as illustrated by the wireless signal information being associated with the animal number, a cow in the illustrated example of 1260 along with a matching score and identification vector information.

As shown, a series of signals such as the wireless signals from an RFID tag may be detected. Each signal includes a time and associated with a unique animal 1210. The selection of known identification vectors from a first database of known identification vectors may further comprise determining a time that the animal recording module 110, 460, 470 obtained the data 1230, 1240 and a time range that is within a range of the determined time. The series of signals may be filtered to select only the signals from the series of signals within the time range. In the illustrated example, the series of signals are 1561, 1734, 2631 and 1934 over a time range of t₁ - t₄. The signals are filtered to select those signals from the series of signals within the time range t₂-t₃ 1265. From this time range, the known identification vector of the unique animal of the selected signals having the highest matching score is selected thereby determining the identity of the animal that was observed.

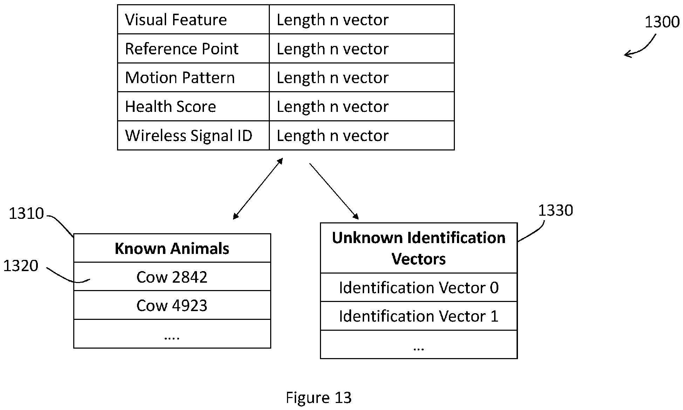

Figure 13 shows a table 1300 of a set of parameters comprising visual features, health and behaviour features and wireless signal identification information. The table contains information associated with the visual feature of the animal having a length n1, information associated with the reference points of the animal having a length n2, information associated with the motion pattern of the animal having a length n3, information associated with the health score, such as for example a body condition score, of the animal having a length n4 and information associated with the wireless signal from the animal having a length n5. The lengths n1-5 can vary between embodiments and need not necessarily be the same size. The reference point, motion pattern and health score information are examples of the one or more characteristics of the animal previously discussed. The identification vector information is averaged across frames from the recording of the animal and stored in a database. Based on the matching score information previously discussed, the identification vector information is either stored in a database 1310 of known animals thereby being considered as a known identification vector corresponding to a unique animal 1320, or may be stored in an unknown identification vector database 1330 thereby being considered as identification vectors which do not correspond to a unique animal. The known animals and unknown identification vector databases are then continuously referred to and updated in response to performing the process of determining the identity of an animal as previously discussed. Accordingly, information on each known and unknown animal is retained in respective databases. In further detail, during a continuous monitoring of the animals, the unknown animals for which an identity has not been determined are promoted to the database of known animals upon determining the identity of that animal following processing of the animal and the confidence of their identity as being that of a known animal exceeding a predetermined threshold. Conversely, when a confidence level on the identity of what was previously a known animal drops below a predetermined threshold, the system re-considers, or identifies, the animal as an unknown animal and un-enrols the animal from the database of known animals to the database of unknown animals. The system automatically and continuously updates the databases based on analysis and determination of whether the animal being monitored is a known or unknown animal. In other words, the system trains and learns from the animals being monitored but never forgets and therefore continually updates based on information being obtained and information previously obtained whether the animal is a newly introduced animal or part of a new herd for example or part of an existing herd. Due to the autonomous nature of the system, the system reaches a confidence level for an animal being monitored and assigns it to the known database and as a confidence level drops, the system determines the animal as unknown and assigns the animal to the unknown database.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

The present teaching may also extend to the features of one or more of the following numbered clauses:
1. A method of determining an identity of an animal, the method comprising:
   obtaining (220), via an animal recording module, data associated with an animal moving through a space, the data comprising a video from a two-dimensional imaging sensor;
   extracting (230), from the data, a set of parameters by performing the steps comprising:
      determining a visual feature of the animal from the data;
      determining instances representing the shape of the animal in the data to form detected instances;
      identifying a set of reference points in each of the detected instances;
      determining one or more characteristics of the animal by processing at least some of the sets of identified reference points in a first module, the first module comprising a trained neural network; and
      generating the set of parameters comprising the visual feature and the determined one or more characteristics;
   generating (240) an identification vector from the generated set of parameters;
   selecting (250) known identification vectors from a first database of known identification vectors, each known identification vector corresponding to a unique registered animal;
   determining (260) a list of matching scores by comparing the generated identification vector with the selected known identification vectors;
   responsive to determining at least one selected known identification vector has a matching score exceeding a threshold;
      selecting (270) one of the at least one known identification vector based on at least one criterion;
      associating (275) the animal using the selected known identification vector; and
      identifying (280) the animal as the unique registered animal of the selected known identification vector; and
   responsive to determining that no selected known identification vector has a matching score that exceeds the threshold, identifying (290) the animal as unknown.
2. The method of clause 1, wherein:
   extracting, from the data, the set of parameters by performing the steps further comprises segmenting the video into a set of frames;
   determining the visual feature of the animal from the data comprises determining the visual feature of the animal from at least one of the frames; and
   determining instances representing the shape of the animal in the data to form detected instances comprises determining an instance representing the shape of the animal in each frame to form detected instances.
3. The method of clause 2, wherein determining an instance representing the shape of the animal in each frame to form detected instances comprises:
   generating a bounding box in each frame in which an instance of the animal body is identified;
   tracking, based on the bounding boxes generated, the movement of the animal across the frames to determine whether the movement of the animal through the space is continuous or interrupted;
   forming detected instances from the bounding boxes that correspond with a continuous motion of the animal.
4. The method of clause 2 or clause 3, wherein identifying a set of reference points comprises:
   extracting the x and y coordinate values of each reference point;
   generating at least a first array and a second array for each individual frame, the first array comprising the x coordinate values of the reference points in each individual frame, and the second array comprising the y coordinate values of the reference points in each individual frame; and
   combining the values in the first and second arrays to create a multi-dimensional array of x and y coordinate values having a size defined by the number of individual frames and the number of reference points.
5. The method of any preceding clause, wherein identifying a set of reference points in each of the detected instances comprises applying a pre-calculated segmentation mask on the detected instance of the animal body.
6. The method of any preceding clause, wherein identifying the animal as unknown comprises adding the generated identification vector to a second database containing unknown identification vectors.
7. The method of any preceding clause, wherein:
   the animal recording module further comprises an electronic receiver for receiving wireless signals; and
   the data further comprises a wireless signal identifying the animal.
8. The method of any preceding clause, wherein the two-dimensional imaging sensor is a colour camera.
9. The method of any preceding clause, wherein determining one or more characteristics comprises:
   determining a health score for the animal by processing at least some of the sets of identified reference points in a second module comprising a trained neural network.
10. The method of any preceding clause, wherein determining one or more characteristics comprises:
   determining a behaviour score for the animal by processing, in a second module comprising a trained neural network, at least some of the sets of identified reference points and identifying variations in at least some coordinate values of the sets of identified reference points.
11. The method of any preceding clause, wherein:
   the method further comprises detecting a series of signals, each signal including a time and being associated with a unique animal; and
   selecting known identification vectors from a first database of known identification vectors further comprises:
      determining a time that the animal recording module obtained the data and a time range that is within a range of the determined time;
      filtering the series of signals to select only the signals from the series of signals within the time range; and
      selecting the known identification vectors of the unique animals of the selected signals.
12. A method according to any preceding clause, wherein the number of common values between the generated identification vector and the compared known identification vector is assessed by determining a cosine similarity between the generated identification vector and the known identification vector.
13. A system for identifying an animal, the system comprising:
   an animal recording module for obtaining data associated with an animal moving through a space;
   an identification system configured for determining an identity of an animal;
   a user device communicatively coupled to the identification system and configured to receive information associated with the determination of the identity of the animal;
   wherein the identification system comprises at least one processor configured to perform the method of any one of clauses 1 to 12.
14. An animal farm comprising the system according to clause 13.
15. Use of the method of clauses 1 to 12 or the system of clause 13 for identifying an animal.

## Claims

1. A method of determining an identity of an animal, the method comprising:
obtaining (220), via an animal recording module comprising a two-dimensional imaging sensor and an electronic receiver for receiving wireless signals, data associated with an animal moving through a space, the data comprising a video from the two-dimensional imaging sensor and a detected wireless signal from the electronic receiver, wherein the electronic receiver is an RFID reader and the wireless signals comprise RFID information transmitted from an RFID tag;
extracting (230), from the data, a set of parameters by performing the steps comprising:
determining a visual feature of the animal from the data;
determining instances representing the shape of the animal in the data to form detected instances;
identifying a set of reference points in each of the detected instances;
determining one or more characteristics of the animal by processing at least some of the sets of identified reference points in a first module; and
generating the set of parameters comprising the visual feature and the determined one or more characteristics;
generating (240) an identification vector from the generated set of parameters;
selecting (250) known identification vectors from a first database of known identification vectors, each known identification vector corresponding to a unique registered animal, wherein acquired RFID information is used to limit the number of candidate animals;
determining (260) a list of matching scores by comparing the generated identification vector with the selected known identification vectors;
responsive to determining at least one selected known identification vector has a matching score exceeding a threshold:
selecting (270) one of the at least one known identification vector based on at least one criterion;
associating (275) the animal using the selected known identification vector; and
identifying (280) the animal as the unique registered animal of the selected known identification vector; and
responsive to determining that no selected known identification vector has a matching score that exceeds the threshold:
identifying (290) the animal as unknown.

2. The method of claim 1, wherein:
extracting, from the data, the set of parameters by performing the steps further comprises segmenting the video into a set of frames;
determining the visual feature of the animal from the data comprises determining the visual feature of the animal from at least one of the frames; and
determining instances representing the shape of the animal in the data to form detected instances comprises determining an instance representing the shape of the animal in each frame to form detected instances.

3. The method of claim 2, wherein determining an instance representing the shape of the animal in each frame to form detected instances comprises:
generating a bounding box in each frame in which an instance of the animal body is identified;
tracking, based on the bounding boxes generated, the movement of the animal across the frames to determine whether the movement of the animal through the space is continuous or interrupted;
forming detected instances from the bounding boxes that correspond with a continuous motion of the animal.

4. The method of claim 2 or claim 3, wherein identifying a set of reference points comprises:
extracting the x and y coordinate values of each reference point;
generating at least a first array and a second array for each individual frame, the first array comprising the x coordinate values of the reference points in each individual frame, and the second array comprising the y coordinate values of the reference points in each individual frame; and
combining the values in the first and second arrays to create a multi-dimensional array of x and y coordinate values having a size defined by the number of individual frames and the number of reference points.

5. The method of any preceding claim, wherein identifying a set of reference points in each of the detected instances comprises applying a pre-calculated segmentation mask on the detected instance of the animal body.

6. The method of any preceding claim, wherein identifying the animal as unknown comprises adding the generated identification vector to a second database containing unknown identification vectors.

7. The method of any preceding claim, wherein the two-dimensional imaging sensor is a colour camera.

8. The method of any preceding claim, wherein determining one or more characteristics comprises:
determining a health score for the animal by processing at least some of the sets of identified reference points in a second module comprising a trained neural network.

9. The method of any preceding claim, wherein determining one or more characteristics comprises:
determining a behaviour score for the animal by processing, in a second module comprising a trained neural network, at least some of the sets of identified reference points and identifying variations in at least some coordinate values of the sets of identified reference points.

10. The method of any preceding claims, wherein:
the method further comprises detecting a series of signals, each signal including a time and being associated with a unique animal; and
selecting known identification vectors from a first database of known identification vectors further comprises:
determining a time that the animal recording module obtained the data and a time range that is within a range of the determined time;
filtering the series of signals to select only the signals from the series of signals within the time range; and
selecting the known identification vectors of the unique animals of the selected signals.

11. A method according to any preceding claim, wherein the number of common values between the generated identification vector and the compared known identification vector is assessed by determining a cosine similarity between the generated identification vector and the known identification vector.

12. A system for identifying an animal, the system comprising:
an animal recording module for obtaining data associated with an animal moving through a space;
an identification system configured for determining an identity of an animal;
a user device communicatively coupled to the identification system and configured to receive information associated with the determination of the identity of the animal;
wherein the identification system comprises at least one processor configured to perform the method of any one of claims 1 to 11.

13. An animal farm comprising the system according to claim 12.
